# EUROPEAN PATENT SPECIFICATION

(11) **EP 0 640 665 B1**
(45) Date of publication and mention of the grant of the patent: **08.04.1998**
(21) Application number: 94202189.0
(22) Date of filing: 27.07.1994
(51) Int. Cl.: C08L 95/00, C10C 3/02

(54) **Process for causing bitumen/polymer blends to become storage stable**
Verfahren um Bitumenpolymermischungen lagerstabil zu machen
Procédé permettant de rendre les mélanges bitume/polymère stables au stockage

(30) Priority: 19.08.1993 IT MI931834
(43) Date of publication of application: 01.03.1995
(73) Proprietor: AGIP PETROLI S.p.A., 00142 Roma (IT)
(72) Inventor: Italia, Paolo, I-20144 Milano (IT)
(74) Representative: Fusina, Gerolamo

(56) References cited:
- EP-A- 0 300 788
- EP-A- 0 458 386
- EP-A- 0 496 457
- US-A- 4 273 685

## Description

The present invention relates to a process for causing blends of bitumen and polymer to become storage-stable.

It is known that in order to improve the quality of bitumen, in particular from the rheological viewpoint, various types of polymers are used, in particular copolymers of elastomeric type.

So, e.g., US-A-4,217,259 teaches using symmetrical radial copolymers constituted by diene blocks and vinylaromatic blocks; US-A-4,585,816 teaches using block copolymers of a monoalkenyl aromatic species and a conjugated diolefin; US-A-3,915,914 teaches using 1-butene homopolymers and copolymers; US-A-3,615,830 claims isoolefin copolymers, in particular polyisobutene.

The most effective polymeric additives seem to be the styrene-diolefin block copolymers, in particular styrene/butadiene and styrene/isoprene block copolymers.

The so modified bitumens can be destined to uses for which the performance of normal bitumens proves to be insufficient. Thus, applications in the field of draining and sound-absorbent conglomerates, in the field of water-proofing systems, and so forth, may be cited.

However, the polymers used in order to modify the properties of bitumens generally display the drawback of being poorly compatible with said bitumens. This lack of compatibility manifests itself as the trend of both components to undergo phase separation under resting conditions; in that way, a polymer-rich top layer and a bitumen-rich bottom layer are formed.

The above said drawback is particularly serious when the production locality does not coincide, as it often happens, with the application locality, or when between the preparation time and the application time, a more or less long time period elapses.

Therefore, the storage-stability of bitumenpolymer blends, in particular when hot, results to be very important for the purposes of a correct and advantageous use thereof.

In order to solve this problem, BE-858,770; BE-858,771 and BE-870,287 disclose reactions of bitumen with polyolefins containing one or more double bonds. The polyolefin gets anchored to bitumen by means of sulfur, which acts as a crosslinking agent.

EP-A-0 496 457 discloses a process which consists in causing the bitumen-polymer blend to react with an unsaturated dicarboxy acid, or its anhydride, in particular with maleic anhydride. This process displays the drawback deriving from the toxicity of maleic anhydride.

EP-A-0 300 788 teaches a multi-step process for preparing modified bitumen compositions, whereby an asphalt, previously treated by a mineral acid and oxygen, is then blended with a thermoplastic elastomer and the obtained modified asphalt is finally reacted with an unsaturated functional monomer.

A process which overcomes the above said drawbacks has been found now.

In accordance therewith, the present invention relates to a process for causing blends of bitumen and thermoplastic polymer to become storage-stable, characterized in that the above said blend is caused to react in an inert environment, at a temperature comprised within the range of from 210 to 240 °C, preferably of from 220 to 230°C, and during a time comprised within the range of from 1 to 4 hours, preferably of from 100 to 150 minutes, with an unsaturated organic compound selected from 1-alkenes, esters of acrylic or methacrylic acid, oleic acid, dicyclopentadiene, and having a molecular weight comprised within the range of from 70 to 1000.

The polymers which can be used in mixture with bitumen are copolymers of elastomeric type. Particularly useful are block copolymers containing vinylbenzenes and conjugated dienes, having a radial structure. This category of polymers can be represented with the general formula X(B-A)ₘ, wherein A represents a block obtained from monomers of vinylbenzene type, B is a block obtained from dienic monomers, X is a radical deriving from a coupling agent and m is a numeral depending on the used coupling agent, and is normally comprised within the range of from 3 to 5 or more.

Particularly useful for obtaining stable blends, are radial copolymers containing polystyrene and polybutadiene blocks (the so-said "SBS" block copolymers) with a ratio of styrene:butadiene comprised within the range of from 20:80 to 40:60 and a molecular weight of from 200,000 to 400,000

The bitumen polymer blends obtained by means of the process according to the present invention result to be stable under storage conditions, e.g., high-temperature storage. Under these conditions, the formation of separated layers or heterogeneous zones is not observed even after long storage time periods.

The above said stabilized mixtures retain for long time their characteristics of flexibility, elasticity, ductility, softening point, and can be advantageously used as binders for road conglomerate and water-proofing membranes.

The stable bitumen-polymer blends according to the present invention are prepared in a simple way by blending, at a temperature comprised within the range of from 210 to 240°C, preferably of from 220 to 230°C, the suitable amounts of bitumen, of the polymer and of the unsaturated agent, under an inert blanketing atmosphere, preferably under nitrogen. The necessary time for the interaction to take place is generally comprised within the range of from 1 to 4 hours, preferably of from 10 to 150 minutes.

According to the preferred embodiment of the present invention, during a first step bitumen and polymer are blended at the desired temperature and then, still at the same temperature, the unsaturated compound is added, preferably under an inert atmosphere. The resulting blend is kept with stirring, caring of re-condensing the vapours for a time comprised within the range of from 1 to 4 hours.

Sometimes, the lighter fractions present in the mixture may optionally be removed by applying a slight depression at treatment end, or by means of a flowing stream of inert gas.

The process according to the present invention did not evidence any limits as regards the polymer content in the stabilized bituminous blend. However, it is preferable that the polymer is present in an amount comprised within the range of from 1 to 15% by weight, based on bitumen.

According to a preferred embodiment of the process according to the present invention, bitumen is admixed with polymer amounts corresponning to levels of from 5 to 20% of polymer, the stabilization of the blend is carried out and then the so stabilized blend is diluted with fresh bitumen in order to obtain a blend in which the end content of thermoplastic polymer is comprised within the range of from 1 to 15% and preferably, in particular for road bitumens, of from 2 to 9% by weight. In that way, by adding fresh bitumen to the stabilized blend, a stable blend of polymer-bitumen can be obtained with the desired fluidity characteristics.

The amount of unsaturated organic compound necessary in order to prepare the stable blends is in general a function of the molecular weight and of the amount of the elastomer. In any cases, the amount of unsaturated organic compound is generally comprised within the range of from 0.1 to 0.8 mols, preferably of from 0.2 to 0.6 mols, per each 100 g of elastomer.

The following examples are reported in order to better illustrate the present invention.

### EXAMPLES

In the following experimental tests, three different bitumens having the following characteristics (Table 1) were used:

**TABLE 1**

| Property | Bitumen 1 | Bitumen 2 | Bitumen 3 |
|---|---|---|---|
| Penetration, 25°C (dmm) | 196 | 193 | 90 |
| Softening point (°C) | 38 | 37.5 | 44.5 |
| Penetration index | -1.04 | -1.35 | -1.26 |
| Fraass break point (°C) | -17 | -17 | -13 |
| Viscosity at 60°C (Pa.s) | 45 | 50 | 120 |

### EXAMPLE 1

20.3 g of SBS (styrene/butadiene/styrene) polymer is added to 220.8 g of bitumen 1, heated at 225°C under a nitrogen atmosphere. After a 30-minute stirring at the temperature of 225°C, 24 g of dodecyl methacrylate is added. The mixture is kept stirred at 225°C, with a reflux condenser, always under a nitrogen atmosphere, for a further 2 hours.

A product with the following characteristics is obtained:
-- penetration at 25°C: 225 dmm
-- softening point (R.B.) : 80°C
-- penetration index: +9.99

The blend is then submitted to high-temperature storage at 170°C in a cylindrical container. After ten days, no layer separation is observed and the difference between the softening points as measured at the container top and container bottom is of only 2°C.

### EXAMPLE 2

Under a nitrogen atmosphere, 220.8 g of bitumen 1 is heated to 225°C; 20.3 g of SBS polymer is added and the blend is kept with stirring for 30 minutes. Then, 14 g of butyl methacrylate is added and the blend is kept with stirring, still at a temperature of approximately 225°C, for a further 120 minutes, caring of re-condensing the more easily volatile portions by means of a reflux condenser.

The so obtained blend displays the following characteristics:
-- penetration at 25°C: 193 dmm
-- softening point: 83°C
-- penetration index: +9.58

The blend is then submitted to high-temperature storage at 170°C. After a 5-days storage, no difference exist between the softening points of the container top and bottom.

### EXAMPLE 3

Under a nitrogen atmosphere, 220.8 g of bitumen 1 is heated up to 220-225°C and is mixed, for 30 minutes, with 24.3 g of SBS polymer. Then, 11.2 g of dicyclopentadiene is added and the resulting blend is kept with stirring for a further 2 hours, with the volatile portions been condensed by means of a reflux condenser.

The resulting blend displays the following characteristics:
-- penetration at 25°C: 89 dmm
-- softening point: 110°C
-- penetration index: +9.22

The blend is then submitted to high-temperature storage. After 5 days, the difference between the top and bottom softening points is of 0.5°C.

### EXAMPLE 4

Under a nitrogen atmosphere, 220.8 g of bitumen 2 is heated up to 225°C, and is stirred for 30 minutes with 20.3 g of SBS polymer. Then, 11.2 g of dicyclopentadiene is added and the blend is kept with stirring for a further 90 minute, with the volatile portions been condensed by means of a reflux condenser.

The resulting blend displays the following characteristics:
-- penetration at 25°C: 85 dmm
-- softening point: 109.5°C
-- penetration index: +9.03

The blend is then submitted to high-temperature storage. After 12 days, the difference between the softening points, as measured at container top and bottom, is of 1.5°C.

### EXAMPLE 5

By operating in a similar way to as disclosed in Example 3, the end blend, after the reaction with dicyclopentadiene, is diluted, at 190°C for 30 minutes, with 148.7 g of type 3 bitumen of grade 80/100, in order to reduce the polymer level down to 6.5%.

The diluted product displays the following characteristics:
-- penetration at 25°C; 90 dmm
-- softening point: 105°C
-- penetration index: +8.83

After a 5-days storage, the softening points of the top and bottom portions of the resulting blend display a difference of 1.0°C, thus demonstrating that modified bitumen retrains its stability also after being diluted with fresh bitumen.

### EXAMPLE 6

By operating as disclosed in Example 1, 220.8 g of bitumen 1 and 20.3 g of SBS are blended with each other. The blend is subsequently admixed with 16.0 g of 1-dodecene.

The resulting blend displays the following characteristics:
-- penetration at 25°C: 176 dmm
-- softening point: 92°C
-- penetration index: +10.12

The blend is then submitted to high-temperature storage at 170°C. Six days later, no differences exist between the top and bottom softening points.

### EXAMPLE 7

By operating as disclosed in Example 1, 220.3 g of bitumen 3 is heated up to 226°C and blended for 30 minutes with 20.3 g of SBS and for 120 minutes with 26 g of oleic acid. The resulting blend displays the following characteristics:
-- penetration at 25°C: 164 dmm
-- softening point: 96.5°C
-- penetration index: +10.2

After a 5-days storage, the difference between the softening points of the top and bottom portions is of 1°C.

### EXAMPLE 8

By operating as explained in above Example 1, 222 g of bitumen 2 is heated up to 227°C and is blended for 30 minutes with 20.5 g of SBS and the resulting mixture is blended for 90 minutes with 8 g of 1-pentene. The resulting blend displays the following characteristics:
-- penetration at 25°C: 83 dmm
-- softening point: 110°C
-- penetration index: +9.00

After a 15-days storage at 170°C, the difference between the head and bottom softening points is of 3.5°C.

### COMPARISON EXAMPLE 9

20.3 g of SBS is added to 220.8 g of bitumen 1 heated at approximately 225°C, and the resulting mixture is kept with stirring for 30 minutes.

Subsequently, without adding any further reactants, the blend is kept with stirring for a further 120-minute time period, under a nitrogen atmosphere, still at approximately 225°C. The so obtained blend displays the following characteristics:
-- penetration at 25°C: 83 dmm
-- softening point: 108°C
-- penetration index: +8.36

After a 3-days storage, a difference of 56°C is observed between the softening points of the top and bottom portions.

### COMPARISON EXAMPLE 10

20.3 g of SBS polymer is added to 220.8 g of bitumen 2 heated at about 225°C and the blend is kept with stirring for 120 minutes.

The resulting blend displays the foffowing characteristics:
-- penetration at 25°C: 82 dmm
-- softening point: 110,5°C
-- penetration index: +9.01

After a 5-days storage, a difference of 45°C is observed between the softening points of the top and bottom portions.

### COMPARISON EXAMPLE 11

The preparation as disclosed in Example 4 is repeated by operating in the same way and using the same amount of reactant, but with the reaction temperature being lowered down to 200°C.

After a 5-days storage, a difference of 52.5°C is observed between the softening points of the top and bottom portions.

## Claims

1. Process for causing blends of bitumen and thermoplastic polymer to become storage-stable, characterized in that the above said blend is caused to react in an inert environment, at a temperature comprised within the range of from 210 to 240°C, and during a time comprised within the range of from 1 to 4 hours, with an unsaturated organic compound selected from 1-alkenes, esters of acrylic or methacrylic acid, oleic acid, dicyclopentadiene, and having a molecular weight comprised within the range of from 70 to 1000.

2. Process according to claim 1, characterized in that the temperature is comprised within the range of from 220 to 230°C and the reaction time is comprised within the range of from 100 to 150 minutes.

3. Process according to claim 1, in which the content of thermoplastic polymer is comprised within the range of from 1 to 15% by weight, based on bitumen.

4. Process according to claim 1, in which thermoplastic polymer is a radial copolymer containing polystyrene and polybutadiene blocks with a ratio of styrene:butadiene comprised within the range of from 20:80 to 40:60 and a molecular weight of from 200,000 to 400,000.

5. Process according to claim 1, in which the amount of unsaturated organic compound is comprised within the range of from 0.1 to 0.8 mols per 100 g of thermoplastic polymer.

6. Process according to claim 5, in which the amount of unsaturated organic compound is of from 0.2 to 0.6 mol per 100 g of thermoplastic polymer.

7. Process for preparing stable blends of bitumen and polymer according to claim 1, which comprises:
(a) heating a bitumen-polymer blend containing from 5 to 20%, by weight, of thermoplastic polymer, with an organic unsaturated compound selected from 1-alkenes, esters of acrylic or methacrylic acid, oleic acid, dicyclopentadiene, and having a molecular weight comprised within the range of from 70 to 1000, at a temperature comprised between 210 and 240°C from 1 to 4 hours.
(b) diluting the resulting blend with fresh bitumen in order to produce a stabilized bitumen-polymer blend containing from 1 to 15% of thermoplastic polymer.

## Patentansprüche

1. Verfahren um Gemische aus Bitumen und thermoplastischem Polymer lagerstabil zu machen, dadurch gekennzeichnet, daß vorstehendes Gemisch veranlaßt wird, sich in einer inerten Umgebung bei einer Temperatur im Bereich von 210 bis 240 °C und während einer Dauer zwischen 1 und 4 Stunden mit einer ungesättigten organischen Verbindung, ausgewählt aus 1-Alkenen, Estern der Acryl- oder Methacrylsäure, Ölsäure, Dicyclopentadien, mit einem Molekulargewicht im Bereich von 70 bis 1.000 umzusetzen.

2. Verfahren nach Anspruch 1, dadurch gekennzeichnet, daß die Temperatur im Bereich von 220 bis 230 °C liegt, und daß die Reaktionsdauer im Bereich von 100 bis 150 Minuten liegt.

3. Verfahren nach Anspruch 1, wobei der auf Bitumen bezogene Gehalt an thermoplastischem Polymer im Bereich von 1 bis 15 Gewichts-% liegt.

4. Verfahren nach Anspruch 1, in dem das thermoplastische Polymer ein radiales Copolymer ist, das Polystyrol und Polybutadienblöcke in einem Verhältnis von Styrol : Butadien im Bereich von 20 : 80 bis 40 : 60 enthält, und ein Molekulargewicht von 200.000 bis 400.000 aufweist.

5. Verfahren nach Anspruch 1, wobei die Menge an ungesättigter organischer Verbindung im Bereich von 0,1 bis 0,8 Mol je 100 g des thermoplastischen Polymers liegt.

6. Verfahren nach Anspruch 5, wobei die Menge an ungesättigter organischer Verbindung im Bereich von 0,2 bis 0,6 Mol je 100 g des thermoplastischen Polymers liegt.

7. Verfahren zur Herstellung stabiler Gemische aus Bitumen und Polymer nach Anspruch 1, umfassend:
(a) Erhitzen eines Bitumen-Polymer-Gemischs, das 5 bis 20 Gewichts-% thermoplastisches Polymer enthält, mit einer organischen ungesättigten Verbindung, die aus 1-Alkenen, Estern der Acryl- oder Methacrylsäure, Ölsäure, Dicyclopentadien ausgewählt ist, und ein Molekulargewicht im Bereich von 70 bis 1.000 aufweist, bei einer Temperatur zwischen 210 und 240 °C für 1 bis 4 Stunden.
(b) Verdünnen des entstandenen Gemischs mit frischem Bitumen, um ein stabilisiertes Bitumen-Polymer-Gemisch herzustellen, das 1 bis 15 % thermoplastisches Polymer enthält.

## Revendications

1. Procédé permettant aux mélanges de bitume et de polymère thermoplastique de devenir stables au stockage, caractérisé en ce que ledit mélange mentionné ci-dessus est mis à réagir dans un environnement inerte, à une température comprise entre 210 et 240°C, et pendant une période de temps comprise entre 1 et 4 heures, avec un composé organique insaturé choisi parmi les 1-alkènes, les esters d'acide acrylique ou méthacrylique, l'acide oléique, le dicyclopentadiène, et ayant une masse moléculaire comprise entre 70 et 1000.

2. Procédé selon la revendication 1, caractérisé en ce que la température est comprise entre 220 et 230°C, et le temps de réaction est compris entre 100 et 150 minutes.

3. Procédé selon la revendication 1, dans lequel la teneur en polymère thermoplastique est comprise entre 1 et 15 %, en poids, par rapport au bitume.

4. Procédé selon la revendication 1, dans lequel le polymère thermoplastique est un copolymère radial qui contient des séquences polystyrène et polybutadiène, avec un rapport styrène/butadiène compris entre 20/80 et 40/60 et une masse moléculaire comprise entre 200 000 et 400 000.

5. Procédé selon la revendication 1, dans lequel la quantité de composé organique insaturé est comprise entre 0,1 et 0,8 mole pour 100 g de polymère thermoplastique.

6. Procédé selon la revendication 5, dans lequel la quantité de composé organique insaturé est comprise entre 0,2 et 0,6 mole pour 100 g de polymère thermoplastique.

7. Procédé permettant de préparer des mélanges de bitume et de polymère selon la revendication 1, comprenant les étapes suivantes :
a) chauffage d'un mélange bitume-polymère contenant de 5 à 20 %, en poids, de polymère thermoplastique, avec un composé organique insaturé choisi parmi les 1-alkènes, les esters d'acide acrylique ou méthacrylique, l'acide oléique, le dicyclopentadiène, et ayant une masse moléculaire comprise entre 70 et 1000, à une température comprise entre 210 et 240°C, pendant 1 à 4 heures
(b) dilution du mélange obtenu avec du bitume frais afin de fabriquer un mélange bitume-polymère stabilisé qui contient de 1 à 15 % de polymère thermoplastique.
